Europäisches Patentamt

European Patent Office

Office européen des brevets

(11) Publication number: **0 099 204**
**B1**

(12) **EUROPEAN PATENT SPECIFICATION**

(45) Date of publication of patent specification: **04.11.87**

(21) Application number: **83303739.3**

(22) Date of filing: **28.06.83**

(51) Int. Cl.⁴: **G 02 B 23/10, F 41 G 1/38**

(54) **Gun sight.**

(30) Priority: **06.07.82 US 395216**

(43) Date of publication of application:
**25.01.84 Bulletin 84/04**

(45) Publication of the grant of the patent:
**04.11.87 Bulletin 87/45**

(84) Designated Contracting States:
**CH DE FR GB IT LI**

(56) References cited:
**CH-A- 384 238**
**CH-A- 386 721**
**DE-B-1 150 216**
**DE-C- 605 355**
**US-A-3 152 214**

(73) Proprietor: **GENERAL ELECTRIC COMPANY**
**1 River Road**
**Schenectady New York 12305 (US)**

(72) Inventor: **Leightner, Robert Allan**
**115 Dunder Road**
**Burlington Vermont 05401 (US)**
Inventor: **Thibault, Henry**
**13 Village Drive**
**Colchester Vermont 05446 (US)**

(74) Representative: **Wood, Anthony Charles et al**
**c/o MICHAEL BURNSIDE & PARTNERS 2**
**Serjeants' Inn Fleet Street**
**London EC4Y 1HL (GB)**

Courier Press, Leamington Spa, England.

# 0 099 204

**Description**

This invention relates to a simple, optical, lead angle determining gun sight which is particularly adapted for anti-aircraft defense.

The typical iron speed ring gun sight comprises an objective of three concentric rings spaced forwardly of an ocular bill. The sight is designed to work at a predetermined cross-over distance, e.g. 800 meters for a 20 mm gun. Each particular type of aircraft is assumed to fly in cross-over at a known, predetermined speed. The gun is bore-sighted to the center of the rings. In use, the sight is aimed so that the target aircraft lies on an appropriate speed ring, e.g. outer ring for 600 km. p.h., middle ring for 400 km. p.h., inner ring for 200 km. p.h., on a flight path directed towards the center of the rings.

An improvement on the iron sight comprises a combination prism and a slightly reducing, fixed power, telescopic system. The image from the telescopic system is combined with the directly observed target in the combination prism so that the eye sees two images of the target, one of which is larger than the other. When the sight is aimed at a fixed target, the images should be concentric. The sight is aimed at a moving target so that the larger image should chase the smaller image (from the telescopic system) along a common flight path, with a predetermined multiple of large image target lengths between them. The lead angle between the two images is a fictitious lead angle and forms only a predetermined fraction of the real lead angle. The gunner must consult a chart showing the multiple of target lengths to be used for each combination of target speed and range; e.g. for four speeds and three ranges, one out of twelve possible multiple lengths must be selected.

Other optical systems of interest are shown in: US—A—1,047,051 which shows a two-field view system; US—A—3,152,214 which shows a zoom system to change the field of view; US—A—2,619,874 which shows a two-field view system; US—A—3,407,302 which shows a system to change optical paths; US—A—2,753,760 which shows an image changing system; and US—A—2,578,013 which shows a drift sight.

CH—A—386721 describes an optical sight, for aiming a weapon at a target, comprising:

a first telescope having a fixed magnification greater than unity to provide a first relatively large image of the target;

a second telescope having a magnification greater than unity to provide a second image, smaller than said first image, of said target;

a common eye piece; and

optical combining means for presenting both said first and second images in the field of view of said eye piece.

That document does not describe the aiming of a gun to the correct lead angle in respect of a moving target.

The present invention is characterised in that:

said second telescope has a magnification variable over a range from greater than unity to less than that of the first telescope whereby the optical combining means presents said second smaller image nearer the centre of the field of view than the first larger image by a perceived extent dependent on the selected magnification of the second telescope, when the images are not both at said centre;

and in that said first and second telescopes are each boresighted to the firing barrel of a gun to permit aiming of the gun to the correct lead angle in respect of a moving target by selecting said variable magnification as a predetermined function of target speed and then moving the gun so that the images are perceived to move along a common path towards the centre of the field of view and are spaced apart by a multiple of lengths of the second smaller image, said multiple being selected as a predetermined function of target course and range.

The present invention also provides a method of aiming a gun, using the above described optical sight, to the correct lead angle in respect of a moving target, characterised by:

boresighting each said telescope to the firing barrel of a gun;

estimating the speed of said target;

selecting the magnification of said second telescope as a predetermined function of said speed, said magnification being variable within a range from greater than unity to less than that of said first telescope;

estimating the course and range of said target; and

moving the gun so that the first and second images are perceived in the field of view of said eye piece to move along a common path towards the center of the field of view, the second smaller image being nearer the centre of the field of view, and so that the images are spaced apart by a multiple of lengths of the second smaller image, said multiple being selected as a predetermined function of said course and range, whereby the gun barrel is aimed at the correct lead angle in respect of said moving target.

The magnification of the second telescope is thus selected by the gunner at the beginning of an engagement in accordance with the known, conventional engagement speed of a target aircraft, thereby permitting the gunner to remember a chart of multiple target lengths for different target ranges without further consideration of target speed. The present optical sight is thus easier to use than the combination prism and fixed power telescopic system of the prior art.

An embodiment of the invention will now be described, by way of example, with reference to the accompanying drawings, in which:—

2

## 0 099 204

Figure 1 shows a first embodiment of this invention:

Figure 2 is a diagram of the trigonometry involved in this invention; and

Figure 3 shows a second embodiment of this invention.

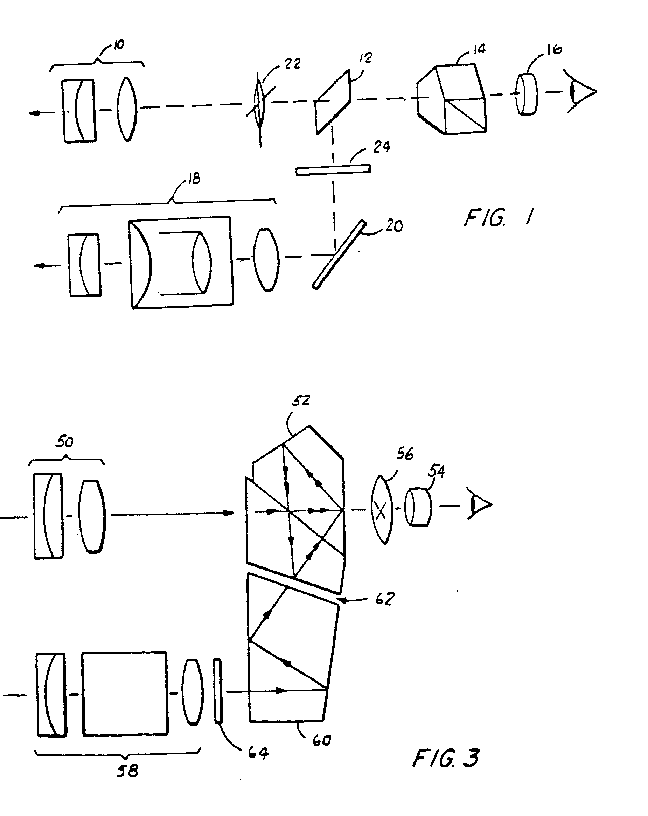

The optical sight shown in Figure 1 includes a conventional first telescope 10 of fixed magnification, such as 3X, whose first image passes through a half-silvered combining glass 12, a stabilization and erection prism 14, and an eyepiece 16. The stabilizing and erection prism may be of the passive-pendulous-gimballed type shown in The Proceedings of the Society of Photo-Optical Instrumentation Engineers, Vol. 39, San Diego, Calif., Aug. 27—29, 1973, pp. 251—257.

A conventional zoom second telescope 18 is adjacent and parallel to the telescope 10 and its second image is reflected by a mirror 20 to the combining glass 12, and thence to the prism 14 and the eyepiece 16.

Both telescopes are fixed to and boresighted to the firing barrel of the gun. A removable reticle 22 is placed in the path of the first image, between the telescope 10 and the combining glass 12. A removable shutter 24 is placed in the path of the second image, between the mirror 20 and the combining glass 12.

The first image may be used by itself against fixed or slow motion targets, such as surface targets, with the reticle 22 in place and superimposed on the first image, and the shutter 24 in place to block the second image.

The second image may be added to the first image by removing the shutter 24 from the path of the second image. The reticle is removed from the path of the first image. In this configuration, the sight may be used to advantage against rapid motion targets such as aircraft to provide a suitable lead angle.

It will be appreciated that each type of aircraft conventionally engages against a surface target at an established speed which is a function of the handling characteristics of that particular aircraft. Therefore, the gunner on the surface who proposes to shoot at the aircraft is able to estimate in advance what the speed of the aircraft will be after he has identified the aircraft by its type. The gunner then adjusts the magnification of the second telescope in accordance with the established engagement speed of the target, as for example:

| 200M Magnification | Target speed |
|---|---|
| 2.5X | 1200 kph |
| 2.4X | 1000 kph |
| 2.3X | 800 kph |
| 2.2X | 600 kph |
| 2.1X | 400 kph |
| 2.0X | 200 kph |

The gunner then sights through the eyepiece 16 at the target so as to have the larger first image aft of the smaller second image and both flying along a common path, which path will cross the center of the field, but which images are spaced apart by a selected multiple of lengths of the second image. The selected multiple is a function of the distance of the target aircraft and the course it is flying.

In the case of the target aircraft flying by the gunner on a course which will not pass over the gunner, the following tracking rule will apply for a typical 20 mm round of ammunition:

| Distance of target from gunner | Multiple |
|---|---|
| 2500—2000 meters | 4 |
| 2000—1500 meters | 3 |
| 1500—1000 meters | 2 1/2 |
| 1000—500 meters | 2 |

In the case of the target aircraft attacking the gunner on a course which starts as a fly by and curves into a pass over, the following tracking rule will apply:

| Distance of target from gunner | Multiple |
|---|---|
| 2500—2000 meters | 4 |
| 2000—1500 meters | 2 |
| 1500—1000 meters | 1 |
| 1000—500 meters | 1/2 |

In the case of the target aircraft attacking the gunner on a course which is directly at the gunner and passes over, the two images would be superimposed to provide zero lead angle.

3

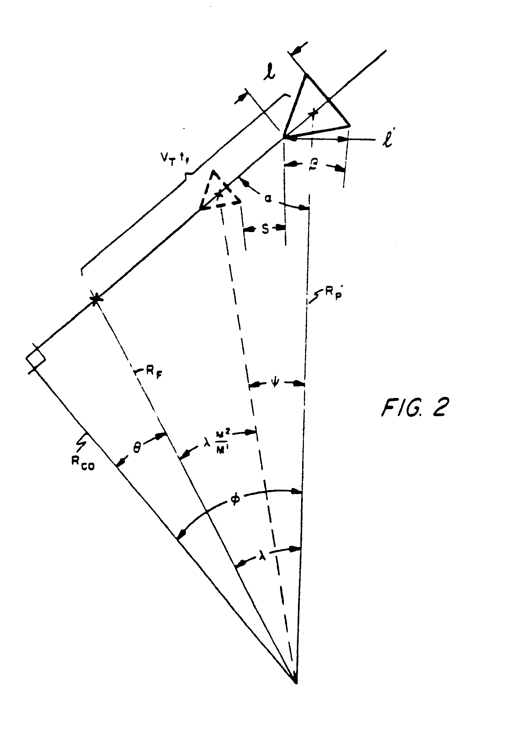

The use of relative magnification as a function of velocity of the target can be explained as follows in conjunction with Figure 2:

Let

$M_1$=magnification of fixed telescope=3X

$M_2$=magnification of variable telescope

$R_{co}$=cross-over range of target

$R_F$=future range of target at time of bullet impact

$R_P$=present range of target at time of firing

$V_T t_f$=velocity of target×time of flight of projectile

$\theta$=angle between $R_{co}$ and $R_F$

$\phi$=angle between $R_{co}$ and $R_P$

$\lambda=\phi-\theta$=lead angle

S=perceived space between small and large images of target

$\beta$=perceived angular length of large target

$l^1$=perceived chordal length of large target

$\alpha$=angle between path of flight of target and present gunner to target axis

$\psi$=angle between small target and large target

l=target length

$$m_1 = 3\times$$

$$m_2 = \text{zoom} \times = \text{lower power}$$

$$l^1 = l\cos\alpha$$

$$\psi = \lambda - \lambda \frac{m^2}{m^1}$$

$$\psi = \lambda\left(1 - \frac{m^2}{m^1}\right)$$

$$\alpha = \sin^{-1}\left(\frac{R_{co}}{R}\right)$$

$$\beta = \sin^{-1}\left(\frac{l^1}{R}\right) = \sin^{-1}\left(\frac{l\cos\alpha}{R}\right)$$

$$\beta = \sin^{-1}\frac{l\cos\left(\sin^{-1}\frac{R_{co}}{R}\right)}{R}$$

$$\psi = (\phi-\theta)\left(1 - \frac{m^2}{m^1}\right)$$

$$\psi = \left(\cos^{-1}\frac{R_{co}}{R} - \cos^{-1}\frac{R_{co}}{R_F}\right)\left(1 - \frac{m^2}{m^1}\right)$$

$$\psi = \left(\tan^{-1}\sqrt{\frac{R^2-R_{co}^2}{R_{co}}} - \tan^{-1}\left(\frac{\sqrt{R^2-R_{co}^2}-V_T t_f}{R_{co}}\right)\right)\left(1 - \frac{m^2}{m^1}\right)$$

$$S = \psi - \frac{\beta}{2} - \frac{\beta}{2}\frac{m^2}{m^1} = \psi - \frac{\beta}{2}\left(1 - \frac{m^2}{m^1}\right)$$

$$\frac{S}{\beta} = \left(\cos^{-1}\left(\frac{R_{co}}{R}\right) - \cos^{-1}\left(\frac{R_{co}}{R_F}\right) - \frac{\beta}{2}\right)\left(1 - \frac{m^2}{m^1}\right)\frac{1}{\beta}$$

0 099 204

$$\frac{S}{\beta} = \frac{\psi}{\beta} - \frac{1}{2}\left(1-\frac{m^2}{m^1}\right)$$

$$\frac{S}{\beta} = \left(\frac{\cos^{-1}\left(\frac{R_{co}}{R}\right) - \cos^{-1}\left(\frac{R_{co}}{R_F}\right)}{\sin^{-1}\left\{\frac{\text{lcos } \sin^{-1}\frac{R_{co}}{R}}{R}\right\}} - \frac{1}{2}\right)\left(1-\frac{m^2}{m^1}\right)$$

Let

$$\frac{S}{\beta} = 1 \text{ at } 1000 \text{ meters}$$

and let $m_1 = 3$
then

$$\frac{S}{\beta} \text{ is a function of range only.}$$

Figure 3 shows a compact variation of the embodiment of the invention. A fixed telescope 50 provides a first large image to a stabilizing-erecting prism 52 and thence to an eyepiece 54. A reticle 56 is normally removed from the path of the image, except when the fixed telescope is used alone against relatively fixed targets. A zoom telescope 58 provides a second, adjustably smaller image to a prism 60 which passes it through a partially reflecting surface 62 whereat it is combined with the first image in the prism 52. A shutter 64 is normally removed from the path of the second image, except when the fixed telescope is used alone against relatively fixed targets.

**Claims**

1. An optical sight, for aiming a weapon at a target, comprising:
a first telescope (10, 16) having a fixed magnification (M1) greater than unity to provide a first relatively large image of the target;
a second telescope (18, 16) having a magnification (M2) greater than unity to provide a second image, smaller than said first image, of said target;
a common eye piece (16); and
optical combining means (12) for presenting both said first and second images in the field of view of said eye piece;
characterised in that:
said second telescope (18, 16) has a magnification variable over a range from greater than unity to less than that of the first telescope (10) whereby the optical combining means (12) presents said second smaller image nearer the centre of the field of view than the first larger image by a perceived extent (S) dependent on the selected magnification of the second telescope, when the images are not both at said centre;
and in that said first and second telescopes (10, 16; 18, 16) are each boresighted to the firing barrel of a gun to permit aiming of the gun to the correct lead angle ($\lambda$) in respect of a moving target by selecting said variable magnification (M2) as a predetermined function of target speed ($V_T$) and then moving the gun so that the images are perceived to move along a common path towards the centre of the field of view and are spaced apart by a multiple of lengths of the second smaller image, said multiple being selected as a predetermined function of target course and range.

2. An optical sight according to claim 1 characterised in that said optical combining means (62) includes an image stabilizing and erecting prism (52).

3. An optical sight according to claim 1 or claim 2 characterised in that a reticle (22) is removably disposed in the path of the image provided by said first telescope (10, 16).

4. An optical sight according to any one of claims 1 to 3 characterised in that a shutter (24) is removably disposed in the path of the image provided by said second telescope (18, 16).

5. A method of aiming a gun, using an optical sight, to the correct lead angle in respect of a moving target, said optical sight comprising:

**0 099 204**

a first telescope (10, 16) having a fixed magnification (M1) greater than unity to provide a first relatively large image of the target;

a second telescope (18, 16) having a magnification (M2) greater than unity to provide a second image, smaller than said first image, of said target; a common eye piece (16); and

optical combining means (12) for presenting both said first and second images in the field of view of said eye piece;

characterized by:

boresighting each said telescope (10, 16; 18, 16) to the firing barrel of a gun;

estimating the speed (V_T) of said target:

selecting the magnification of said second telescope (18, 16) as a predetermined function of said speed, said magnification being variable within a range from greater than unity to less than that of said first telescope (10, 16);

éstimating the course and range of said target; and

moving the gun so that the first and second images are perceived in the field of view of said eye piece (16) to move along a common path towards the centre of the field of view, the second smaller image being nearer the centre of the field of view, and so that the images are spaced apart by a multiple of lengths of the second smaller image, said multiple being selected as a predetermined function of said course and range, whereby the gun barrel is aimed at the correct lead angle (λ) in respect of said moving target.

## Patentansprüche

1. Optische Zielvorrichtung zum Richten einer Waffe auf ein Ziel, enthaltend:

ein erstes Sehrohr (10, 16) mit einer festen Vergrößerung (M1) größer als Eins, um ein erstes relativ großes Bild des Zieles zu liefern,

ein zweites Sehrohr (18, 16) mit einer Vergrößerung (M2) größer als Eins, um ein zweites Bild, das kleiner als das erste Bild ist, des Zieles zu liefern,

ein gemeinsames Okular (16) und

eine optische Verknüpfungseinrichtung (12) zum Darstellen sowohl des ersten als auch zweiten Bildes in dem Sichtfeld des Okulars,

dadurch gekennzeichnet, daß:

das zweite Sehrohr (18, 16) eine Vergrößerung hat,

die über einem Bereich von größer als Eins bis weniger als diejenige des ersten Sehrohres (10) variabel ist, wodurch die optische Verknüpfungseinrichtung (12) das zweite, kleinere Bild näher an der Mitte des Sichtfeldes als das erste, größere Bild um ein wahrgenommenes Maß (S) darstellt, das von der gewählten Vergrößerung des zweiten Sehrohres abhängt, wenn die Bilder sich nicht beide in der Mitte befinden, und die ersten und zweiten Sehrohre (10, 16; 18, 16) jeweils auf den Feuerlauf eines Geschützes justiert sind, um ein Richten des Geschützes auf den richtigen Vorhaltewinkel (λ) in bezug auf ein sich bewegendes Ziel zu gestatten, indem die variable Vergrößerung (M2) als eine vorbestimmte Funktion der Zielgeschwindigkeit (V_T) gewählt und dann das Geschütz so bewegt wird, daß die Bilder so wahrgenommen werden, daß sie sich entlang einer gemeinsamen Bahn in Richtung auf die Mitte des Sichtfeldes bewegen und in einem Abstand von einem Vielfachen der Längen des zweiten, kleineren Bildes angeordnet sind, wobei das Vielfache als eine vorbestimmte Funktion des Kurses und der Entfernung des Ziels gewählt ist.

2. Optische Zielvorrichtung nach Anspruch 1, dadurch gekennzeichnet, daß die optische Verknüpfungseinrichtung (62) ein Bildstabilisierungs- und -aufrichtungsprisma (52) aufweist.

3. Optische Zielvorrichtung nach Anspruch 1 oder 2, dadurch gekennzeichnet, daß ein Fadenkreuz (22) beseitigbar in der Bahn des Bildes angeordnet ist, das durch das erste Sehrohr (10, 16) geliefert wird.

4. Optische Zielvorrichtung nach einem der Ansprüche 1 bis 3, dadurch gekennzeichnet, daß eine Blende (24) beseitigbar in den Bahn des Bildes angeordnet ist, das durch das zweite Sehrohr (18, 16) geliefert wird.

5. Verfahren zum Richten eines Geschützes mit dem richtigen Vorhaltewinkel in bezug auf ein sich bewegendes Ziel unter Verwendung einer optischen Zielvorrichtung, die aufweist:

ein erstes Sehrohr (10, 16) mit einer festen Vergrößerung (M1) größer als Eins, um ein erstes, relativ großes Bild des Ziels zu liefern,

ein zweites Sehrohr (18, 16) mit einer Vergrößerung (M2) größer als Eins, um ein zweites Bild, das kleiner als das erste Bild ist, des Ziels zu liefern,

ein Okular (16) und

eine optische Verknüpfungseinrichtung (12), die sowohl das erste als auch zweite Bild in dem Sichtfeld des Okulars darstellt,

gekennzeichnet durch:

Justieren jedes Sehrohres (10, 16; 18, 16) auf den Feuerlauf eines Geschützes,

Abschätzen der Geschwindigkeit (V_T) des Ziels,

Wählen der Vergrößerung des zweiten Sehrohres (18, 16) als eine vorbestimmte Funktion der Geschwindigkeit, wobei die Vergrößerung innerhalb eines Bereiches von größer als Eins bis weniger als diejenige des ersten Sehrohres (10, 16) variabel ist,

Abschätzen des Kurses und der Entfernung des Ziels und

# 0 099 204

Bewegen des Geschützes derart, daß die ersten und zweiten Bilder in dem Sichtfeld des Okulars (16) so wahrgenommen werden, daß sie sich entlang einer gemeinsamen Bahn in Richtung auf die Mitte des Sichtfeldes bewegen, wobei das zweite, kleinere Bild näher der Mitte des Sichtbildes ist, und so daß die Bilder in einem Abstand von einem Vielfachen der Längen des zweiten, kleineren Bildes sind, wobei das Vielfache als eine vorbestimmte Funktion des Kurses und der Entfernung gewählt sind, wodurch der Geschützlauf bei dem richtigen Vorhaltewinkel (λ) in bezug auf das sich bewegende Ziel gerichtet wird.

## Revendications

1. Appareil de visée optique, pour pointer une arme sur une cible, comprenant:

un premier télescope (10, 16) ayant un grossissement fixe ($M_1$) supérieur à l'unité pour fournir une première image relativement grande de la cible;

un second télescope (18, 16) ayant un grossissement ($M_2$) supérieur à l'unité pour fournir une seconde image, plus petite que la première image, de la cible;

un oculaire commun (16); et

un moyen de combinaison optique (12) pour présenter la première ainsi que la seconde image dans le champ de vision de l'oculaire;

caractérisé en ce que:

le second télescope (18, 16) a un grossissement variant dans une plage allant d'une valeur supérieure à l'unité à une valeur inférieure à celle du premier télescope (10), d'où il résulte que le moyen de combinaison optique (12) présente la seconde image, plus petite, plus près du centre du champ de vision que la première image, plus grande, suivant une étendue perçue (S) dépendant du grossissement choisi pour le second télescope, lorsque les images ne sont pas toutes deux audit centre; et

en ce que les premier et second télescopes (10, 16; 18, 16) visent chacun suivant l'âme de tir d'un canon pour vérification de la dérive normale de manière à permettre le pointage du cannon suivant l'angle de corrections-but correct (λ) par rapport à une cible movible en choisissant le grossissement variable ($M_2$) comme une fonction prédéterminée de la vitesse de la cible ($V_T$) et ensuite en déplaçant le canon de façon que les images soient perçues comme se déplaçant suivant un trajet commun dans la direction du centre du champ de vision et soient espacées d'un multiple de longueurs de la second image, plus petite, ce multiple étant choisi comme une fonction prédéterminée du parcours de la cible et de sa distance.

2. Appareil de visée optique selon la revendication 1, caractérisé en ce que le moyen de combinaison optique (62) comprend un prisme de stabilisation et de redressement d'image (52).

3. Appareil de visée optique selon la revendication 1 ou la revendication 2, caractérisé en ce qu'un réticule (22) est disposé de manière amovible dans le trajet de l'image fournie par le premier télescope (10, 16).

4. Appareil de visée optique selon l'une quelconque des revendications 1 à 3 caractérisé en ce qu'un diaphragme (24) est disposé de manière amovible dans le trajet de l'image fournie par le second télescope (10, 16).

5. Procédé de pointage d'un canon utilisant un appareil de visée optique, suivant l'angle de corrections-but correct par rapport à une cible movible, l'appareil de visée optique comprenant:

un premier télescope (10, 16) ayant un grossissement fixe ($M_1$) supérieur à l'unité pour fournir une première image relativement grande de la cible;

un second télescope (18, 16) ayant un grossissement ($M_2$) supérieur à l'unité pour fournir une seconde image, plus petite que la première image, de la cible;

un oculaire commun (16); et

un moyen de combinaison optique (12) pour présenter la première ainsi que la seconde image dans le champ de vision de l'oculaire;

caractérisé par:

la visée par l'âme de tir d'un canon de chacun desdits télescopes (10, 16; 18, 16);

l'estimation de la vitesse ($V_T$) de la cible;

la sélection du grossissement du second télescope (10, 16) comme une fonction prédéterminée de la vitesse, le grossissement étant variable dans une plage allant d'une valeur supérieure à l'unité à une valeur inférieure à celle du premier télescope (18, 16);

l'estimation du parcours et de la distance de la cible; et

le déplacement du canon de façon que les première et seconde images soient perçues dans le champ de vision de l'oculaire (16) comme se déplaçant suivant un trajet commun dans la direction du centre du champ de vision, la seconde image, plus petite, étant plus proche du centre du champ de vision, de façon que les images soient espacées par un multiple de longueurs de la seconde image, plus petite, ce multiple étant choisi comme une fonction prédéterminée du parcours et de la distance, d'où il résulte que l'âme du canon est dirigée suivant l'angle de corrections-but correct (λ) par rapport à la cible mobile.

FIG. 1

FIG. 3

0 099 204

FIG. 2

2